# EUROPÄISCHE PATENTSCHRIFT

(11) **EP 3 888 034 B1**
(45) Veröffentlichungstag und Bekanntmachung des Hinweises auf die Patenterteilung: **03.01.2024**
(21) Anmeldenummer: 19809033.4
(22) Anmeldetag: 20.11.2019
(51) Int. Cl.: G06Q 10/08

(54) **VERFAHREN UND SYSTEM ZUR STEUERUNG DES MATERIALFLUSSES VON OBJEKTEN IN EINER FÖRDERTECHNISCHEN ANLAGE EINES REALEN LAGERS**
METHOD AND SYSTEM FOR CONTROLLING THE MATERIAL FLOW OF OBJECTS IN A CONVEYOR SYSTEM OF A REAL WAREHOUSE
PROCÉDÉ ET SYSTÈME POUR LE CONTRÔLE DU FLUX DE MATÉRIAUX D'OBJETS DANS UNE INSTALLATION TECHNIQUE DE TRANSPORT D'UN ENTREPÔT RÉEL

(30) Priorität: 28.11.2018 DE 102018130206
(43) Veröffentlichungstag der Anmeldung: 06.10.2021
(73) Patentinhaber: Dematic GmbH, 63150 Heusenstamm (DE)
(72) Erfinder: MEURER, Hans Christoph, 55234 Framersheim (DE)
(74) Vertreter: Moser Götze & Partner Patentanwälte mbB
(86) Internationale Anmeldenummer: PCT/EP2019/081995
(87) Internationale Veröffentlichungsnummer: WO 2020/109116

(56) Entgegenhaltungen:
- EP-A1- 3 330 201
- WO-A1-2016/108937
- CN-A- 108 726 070
- US-A1- 2012 303 336
- US-A1- 2018 131 907

## Beschreibung

Die Erfindung betrifft ein Verfahren zur Steuerung des Materialflusses von Objekten in einer fördertechnischen Anlage eines realen Lagers gemäß Anspruch 1.

Es ist allgemein bekannt, bei Lagern im Bereich der innerbetrieblichen Logistik oder Nachschub- oder Verteilzentren etc. den Materialfluss von Artikeln auf den fördertechnischen Anlagen durch die Verwendung von lokalen Sensoren und lokalen dezentralen Steuerungen (SPS) zu kontrollieren und zu regeln, die die Artikel und deren Position erkennen bzw. bestimmen.

So muss zur Betätigung von Antrieben in solchen fördertechnischen Anlagen (Aktorik) die Lage der Fördergüter (Artikel) zuverlässig bestimmt werden. Dies geschieht üblicherweise mit Hilfe von Lichtschranken und Lichttastern (Sensorik).

In begrenztem Umfang wird die Lage der Fördergüter über bekannte Förderzeiten seit der letzten Positionsmeldung (z. B. Tracking) auch errechnet.

Die Identifikation der Fördergüter erfolgt meist durch Lesung von Barcodes oder anderer Markierungen (Scanner).

So beschreibt die EP 3 009 984 A1 die optische Erkennung von optischen Codes mittels Bilderkennung der Codes und Vergleich von Bewegungsvektoren.

Die Auslösung von Bewegungen der Materialflusstechnik bzw. fördertechnischen Anlagen aufgrund von Meldungen der Sensorik erfolgt dabei meist dezentral über Steuerungsrechner, sog. Speicherprogrammierbaren Steuerungen (SPS).

Es muss somit ein erheblicher Aufwand getrieben werden. Zum Aufwand zur Ansteuerung der Aktorik gehören Sensoren einschließlich deren Verkabelung zur Stromversorgung, die Datenverbindung aller Sensoren und fördertechnische Aktoren, wie z. B. angetriebene Stopper, Weichen, Pusher etc. mit dem/den Steuerrechner(n) (SPS) sowie die Erstellung des Programmcodes für die SPS. Die entsprechenden Kosten für Material, Installation, Inbetriebnahme und Programmierung sowie Wartung stellen einen erheblichen Anteil der Gesamtkosten der Anlage dar, wobei die Steuerung in der Regel mehr als die Mechanik kostet. Hinzu kommt die Verfügbarkeit von Personal mit Spezialkenntnissen der SPS Programmierung.

In der US 2014/0236555 A1 ist es offenbart, reale Daten aus einer Logistikanlage in ein virtuelles Modell dessen einfließen zulassen, um die virtuelle Umgebung hinsichtlich des Förderflusses zu verbessern bzw. realistischer zu gestalten, um verbesserte Testergebnisse zu erhalten.

Aus dem Artikel "Decentralized Control of a Material Flow System Enabled by an Embedded Computer Vision System" (Communications Workshops (ICC), 2011 IEEE International Conference on, 20110605 IEEE - ISBN 978-1-61284-954-6; ISBN 1-61284-954-7) ist es ferner bekannt, auf Ebene der dezentralen Steuerungen kamerabasierte Objekterkennung mittels Marker einzusetzen.

Aus der EP 2 183 175 B1 ist es bekannt, eine Förderanlage mittels optischer Sensoren und auch Bildsensorik in Echtzeit zu steuern. Dies bringt jedoch in größeren Anlagen einen erheblichen Aufwand für eine Echtzeitbearbeitung und Auswertung der Bilddaten, insbesondere der Bilderkennung mit sich.

Aus der CN 108 726 070 A ist die Steuerung eines Materialflusses einer fördertechnischen Anlage mit Hilfe eines virtuellen Modells (digital twin) und einer visuellen Erfassung der Anlage bekannt.

Aufgabe der Erfindung ist es daher, eine Möglichkeit zu schaffen, trotz Verwendung einer Bilderkennung, den damit verbundenen Aufwand zu reduzieren und gleichzeitig den Steuerungsaufwand sowie den Installations- und Betriebsaufwand der Aktorik in fördertechnischen Anlagen von Lagern zu vermindern. Hinzu kommt, die Leistungsfähigkeit der installierten Fördertechnik zu steigern bzw. besser auszunutzen.

Die Erfindung ist durch den Gegenstand des in Anspruch 1 angegeben Verfahrens und den Gegenstand des in Anspruch 7 angegeben Systems definiert.

Erfindungsgemäß ist erkannt worden, dass, wenn die realen fördertechnischen Anlagen in Lagern anhand eines virtualisierten dreidimensionalen Modells gesteuert werden, es möglich ist, die Belastung bzw. den Aufwand für die Bilderkennung zu verringern, da die Anlage mittels des virtuellen Modells gesteuert wird und dieses nicht in Echtzeit mit Bilddaten gefüttert werden muss, sondern nur zyklisch zum Abgleich überprüft wird. Zudem kann so der Materialfluss durch Aktorensteuerung vereinfacht werden. Hinzu kommt, die Einfachheit die Leistungsfähigkeit der installierten Fördertechnik zu steigern bzw. besser auszunutzen.

Bei dem erfindungsgemäßen Verfahren wird zur Steuerung des Materialflusses von Objekten bzw. Fördergütern in einer fördertechnischen Anlage eines realen Lagers eine dreidimensionales Modell der Anlage virtualisiert, wozu in einem zentralen Rechner die fördertechnische Anlage des realen Lagers virtualisiert wird, wofür ein virtuelles dreidimensionales Modell der realen fördertechnischen Anlage mit den Abmessungen der einzelnen fördertechnischen Komponenten und deren Bewegungsparametern einschließlich der Aktoreneigenschaften und der Identität und Lage der Objekte hinterlegt ist, und die fördertechnische Anlage des realen Lagers aus dem virtuellen Modell heraus zentral gesteuert wird, von den Objekten in der realen fördertechnischen Anlage mittels Sensoren Bilder zyklisch erfasst werden, und das virtuelle Modell zyklisch anhand der aufgenommenen Bilder mit der Realität abgeglichen wird.

Bei Virtualisierung handelt es sich um die Abstraktion physischer Komponenten der realen Anlage, wie Förderer, Aktoren, Objekte (Ladungsträger und Ladung selbst) sowie weitere Hardware. Durch Kalibrierung werden dann das virtuelle Modell und die reale Anlage ggf. aneinander angepasst.

Der Begriff Virtualisierung meint also auf Technologien, die es ermöglichen, physische Komponenten der realen Anlage mittels Software unabhängig von ihrer physischen Grundlage bereitzustellen.

Mit anderen Worten, die reale Anlage wird über das virtuelle Modell gesteuert, im dem sich parallel zum realen Lager, die Aktoren, Fördertechnik und Objekte in ihrer Lage etc. ändern. Es werden lediglich zyklisch, aber nicht notwendigerweise dauernd oder gar in Echtzeit, diese simulierten Änderungen in der Realität überprüft und bei Unterschieden, das Modell abgeglichen.

Hierzu können aus den erfassten Bildern in dem zentralen Rechner mittels Bilderkennung die Objekte identifiziert und deren Position zum Zeitpunkt der Bilderfassung in der realen fördertechnischen Anlage bestimmt werden und das virtuelle Modell zyklisch anhand der Identifikation und Positionsbestimmung abgeglichen werden.

Alternativ können die erfassten Bilder in dem zentralen Rechner mit aus dem virtuellen Modell errechneten Bildern mittels Bilderkennung verglichen werden, um Abweichungen festzustellen. Es werden also aus dem Zustand des Modells virtuelle Bilder errechnet, die den realen Bildern entsprechen, um durch Vergleich bereits auf Bildebene zu überprüfen, ob Abweichungen vorliegen. Dies dient der Unterstützung der Bilderkennung und erspart Rechenleistung.

Das virtualisierte Modell der realen Anlage umfasst einerseits die fördertechnischen und sonstigen Anlagen und andererseits die Objekte mit ihren wechselnden Positionen.

Die fördertechnischen und sonstigen Anlagen werden als physikalische Modellkomponenten im virtualisierten Modell eingepflegt.

Zur anfänglichen Population des virtuellen Modells mit den Daten der Objekte, können die Position und Identität der Objekte aus einer anfänglichen Bilderfassung und/oder aus Datenbankinformationen zum Startzeitpunkt der Virtualisierung ermittelt werden. Anschließend ergibt sich die jeweilige Position der Objekte durch die Veränderung im Modell entsprechend der hinterlegten fördertechnischen Eigenschaften und der damit einhergehenden Veränderungen der Positionen der Objekte.

Vorzugsweise umfasst das virtuelle Modell ein virtuelles dreidimensionales Modell des gesamten Lagers einschließlich aller fördertechnischen Anlagen, Objekte und Regallager, und nicht nur einzelne Förderstrecken oder Bereiche.

Es können an geeigneten Stellen Bild-Sensoren (z. B. Kameras) installiert werden, die die Fördergüter auf der Materialflusstechnik einschließlich der Regalbediengeräte und im Lagerregal erfassen. Die Kameras übertragen die Bilder (Filme) zyklisch an einen Rechner. Über eine ablaufende Bilderkennung werden die Fördergüter erkannt und deren Position jederzeit exakt bestimmt und nachverfolgt. Aufgrund dieser Informationen kann der Rechner das virtuelle Modell der fördertechnischen Anlage einschließlich aller Fördergüter einschließlich deren Position auf der jeweiligen Fördertechnik und im Lagerregal überprüfen bzw. abgleichen. Das virtuelle dreidimensionale Modell des Lagers einschließlich der Fördertechnik umfasst u.a. Abmessungen und Position der einzelnen Komponenten und deren Bewegungsparameter (Geschwindigkeit, Beschleunigung usw.).

Die Identifizierung der Fördergüter (welcher Artikel, welcher Auftrag) kann ebenfalls durch die Auswertung der Kamerabilder erfolgen. Somit steht im Rechner ein abgeglichenes Modell der Anlage einschließlich der Fördergüter mit allen Informationen, die zur Auslösung von Aktoren erforderlich sind, zur Verfügung. Der Rechner erzeugt aus diesen Informationen und den Anforderungen des Leitsystems (Lagerverwaltungsrechner, Routing, Zielvorgaben der Auftragsabarbeitung etc.) Befehle an die Aktorik, um den Materialfluss gezielt zu steuern.

Der zentrale Rechner weist dementsprechend vorzugsweise eines oder mehrere verschiedene Module auf:
- Schnittstelle zu den Sensoren, Kameras zur Entgegennahme der Bilddaten;
- Aufbereitung und Verarbeitung der Bilddaten;
- Bilderkennung und nachgelagerte Identifikation und Positionsbestimmung der erkannten Fördergüter;
- Virtualisiertes Modell des realen Lagers mit abgeglichenen Informationen, die aus der Bilderkennung stammen, bezüglich Identifikation und Positionsbestimmung der Fördergüter;
- Schnittstelle zum Lagerverwaltungsrechner zur Berücksichtigung des Routings und Zielvorgaben der Auftragsabarbeitung;
- Erzeugung von Materialflusssteuerungsbefehlen mittels des virtualisierten Modells für die realen Aktoren zur Steuerung der Förderbewegung der jeweiligen Fördergüter zu deren Einlagerung, Lagerung, Auslagerung, ggf. Sortierung und Förderung zur Auftragsabarbeitung;

Mit der erfindungsgemäßen Steuerung über das virtualisierte Modell kann zunächst die Bilderkennung entlastet werden, da diese im Vergleich zum Stand der Technik nicht in Echtzeit arbeiten muss. Ferner können klassische Sensoren einschließlich Verkabelung eingespart werden. Die SPS-Hardware und -Software entfällt und wird durch den neuen Steuerrechner ersetzt. Diesem stehen mehr Informationen zur Verfügung, mit deren Hilfe der Materialfluss optimiert werden kann. Beispielsweise sind das Ziel und die momentane Position jedes Fördergutes zu jeder Zeit bekannt, so dass die Lücken im Förderfluss optimiert und damit die Leistung einer Förderstrecke erhöht werden kann. Durch den Wegfall der traditionellen "SPS" und dadurch, dass der neue Steuerrechner auf der gleichen Plattform wie der Lagerverwaltungsrechner laufen kann (z. B. Java-Programmiersprache) entfällt eine erforderliche Fachdisziplin (SPS-Programmierer) mit den entsprechenden Vorteilen beim Personaleinsatz.

Als Sensoren eignen sich vorzugsweise IP-Kameras, auch Netzwerkkameras genannt.

Vorzugsweise sind die Sensoren zur Bildaufnahme derart im Lager angeordnet, dass das Sichtfeld der Bildaufnahme Einschleusstellen, Ausschleusstellen, Kreuzungen und Umlenkstellen sowie Ein- und Auslagerstellen der Fördergüter auf den fördertechnischen Komponenten beinhaltet.

Die Erfindung betrifft auch ein entsprechendes System zur Steuerung des Materialflusses von Objekten in einem Distributionslager oder einem Zentrallager mit einem zentralen Rechner, der eingerichtet ist, um ein virtuelles dreidimensionales Modell der realen fördertechnischen Anlage vorzuhalten, in dem die reale fördertechnische Anlage mit Abmessungen der einzelnen fördertechnischen Komponenten und deren Bewegungsparametern einschließlich der Aktoreneigenschaften und der Identität und Lage der Objekte hinterlegt ist, und die fördertechnische Anlage des realen Lagers aus dem virtuellen Modell heraus zentral gesteuert wird, wozu eine Schnittstelle zu einem Lagerverwaltungsrechner zum Austausch von Daten bezüglich des Routings und Zielvorgaben der Auftragsabarbeitung von den Fördergütern und ein Modul zur Erzeugung von Materialflusssteuerungsbefehlen über eine Schnittstelle zu Aktoren der fördertechnischen Anlage für die Steuerung der Aktoren mit Hilfe des virtualisierten Echtzeit-Modells vorgesehen sind, mit Bildsensoren zur zyklischen Erfassung von Bildern von den Fördergütern in der fördertechnischen Anlage, einer Schnittstelle zwischen den Bildsensoren und dem zentralen Rechner zur Bereitstellung von Bilddaten in vorgegebenen zyklischen Zeitintervallen, wobei der zentrale Rechner mit einer Vergleichseinrichtung ausgestattet ist, um das virtuelle Modell zyklisch anhand der aufgenommenen Bilder mit der Realität abzugleichen.

Vorzugsweise sind die Bildsensoren an Stellen der fördertechnischen Anlage angeordnet, an denen eine Einlagerung, Lagerung, Auslagerung, Sortierung und Förderung zur Auftragsabarbeitung der Fördergüter erfolgt.

In einer bevorzugten Ausführungsform handelt es sich bei der fördertechnischen Anlage um einen Rollen- oder Bandförderer.

Wenn die Bildsensoren IP-Kameras sind, die derart angeordnet sind, dass ihr Sichtfeld die Bildaufnahme von Einschleusstellen, Ausschleusstellen, Kreuzungen und Umlenkstellen sowie Einlagerstellen und Auslagerstellen der Fördergüter auf den fördertechnischen Komponenten umfasst, können die materialflusskritischen Stellen gut überwacht und trotzdem ohne eine hohe Zahl von Bildsensoren gesteuert werden.

Es versteht sich, dass auch - je nach Bedarf - parallel klassische Sensorik verwendbar bleibt.

Möglich ist es auch, entsprechende Bildsensoren auf Regalbediengeräten etc. im Bereich der Lagerregale des Lagers vorzusehen. So können die Ausrichtung der Objekte bzw. Fördergüter im Regal und die Belegung bestimmt werden. Das Sichtfeld der entsprechenden Bildsensoren kann also auch die Lagerregale umfassen.

Die Erfindung umfasst auch ein entsprechendes Computerprogrammprodukt, umfassend Befehle, die bei der Ausführung des Programms durch einen Computer diesen veranlassen, das zuvor beschriebene Verfahren bzw. die Schritte des auszuführen, insbesondere ein solches Verfahren nach irgendeinem einem der Ansprüche 1 bis 9.

Weitere Merkmale und Einzelheiten der Erfindung ergeben sich aus der nachfolgenden Beschreibung der Zeichnung. Es zeigen:
Fig. 1 eine schematische Draufsicht eines Fördersystems und eines Regallagers zur Einund Auslagerung von Paketen und
Fig. 2 ein schematisches Ablaufdiagramm des Steuerverfahrens.

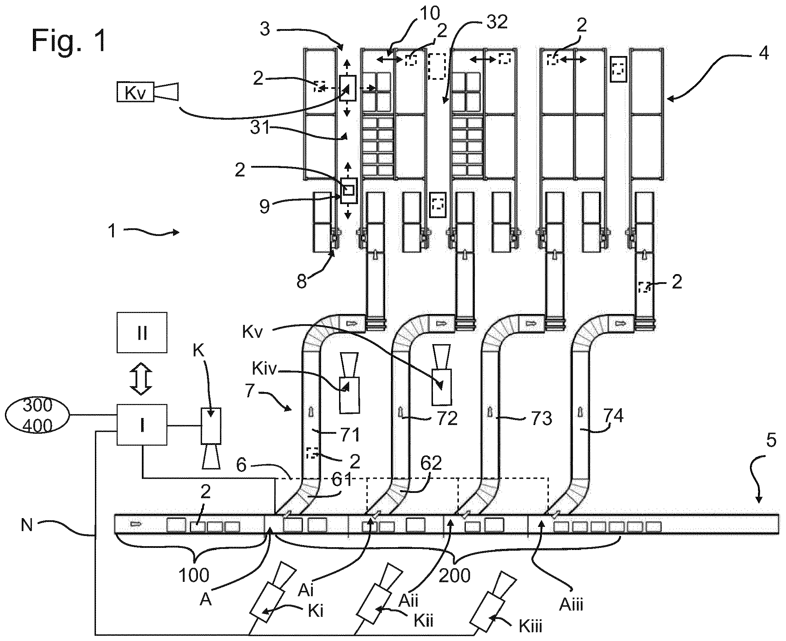

Die Figur 1 zeigt eine Draufsicht auf einen Teil eines Zentrallagers mit einem Fördersystem 1 zum Einlagern von Paketen 2 in Lagerregalgassen 3, welche durch parallel und einander gegenüberliegend angeordnete Lagerregale 4 mit mehreren Ebenen gebildet werden.

Das Fördersystem 1 umfasst eine Verteilstrecke 5, die Pakete 2 an- bzw. abfördert. Zwischen der Verteilstrecke 5 und den Lagerregalen 4 sind Ein- bzw. Auslagerstrecken 7 angeordnet. Diese sind durch Ein- bzw. Ausschleusungen 6 mit der Verteilstrecke 5 und über Warenlifte 10 mit Lagerregalgassen 3 verbunden. Benachbarte Ein/Auslagerstrecken 71 und 72, 73 ... sind jeweils parallel angeordnet.

Die Pakete 2 werden durch die Warenlifte 8 von den Einlagerstrecken 7 in die Regalebenen der Lagerregale 4 bzw. von den Regalebenen auf die Auslagerstrecken 7 transportiert. Ein Transport der Pakete 2 innerhalb der Regalebenen der Lagerregale 4 erfolgt über Regalbediengeräte 9.

Hierbei bewegt sich vorzugsweise jeweils ein Regalbediengerät 9, beispielsweise ein Shuttle-Fahrzeug, auf jeder Regalebene. Das Regalbediengerät 9 ist mit Lastaufnahmemitteln, beispielsweise Teleskoparmen, ausgestattet, welche einen Transfer auf eine Transportfläche des Regalbediengeräts 9 hinauf oder von einer Transportfläche eines Regalbediengeräts 9 hinab ermöglichen.

Nachfolgend wird das Verfahren im Falle der Einlagerung von Paketen 2 anhand der Figur 1 erläutert.

Im Bereich der Zuführung 100 werden von einer IP-Kamera K in zyklischen Intervallen Bilder von der Verteilstrecke 5 aufgenommen, auf der beispielhaft ein Paket 2 bewegt wird.

Die Bilddaten von der IP-Kamera K werden über ein Netzwerk N an einen Rechner I übermittelt und aufbereitet und so verarbeitet, dass sie in einem Bilderkennungsmodul 300 für eine nachgelagerte Identifikation und Positionsbestimmung 400 der auf der Verteilstrecke 5 sich befindenden Fördergüter bzw. des Pakets 2 verwendet werden können.

In dem Rechner I ist zudem ein dreidimensionales Modell der fördertechnischen Anlage 1 virtualisiert, wofür ein virtuelles Modell der gesamten realen fördertechnischen Anlage 1 mit den Abmessungen der einzelnen fördertechnischen Komponenten und deren Bewegungsparametern einschließlich der Aktoreneigenschaften und Lagerregale etc. hinterlegt ist.

Dieses Modell im Rechner I wird zyklisch mit den Informationen aus der der Bilderkennung 300 nachgelagerten Identifikation und Positionsbestimmung 400 der erkannten Fördergüter abgeglichen, um sicherzustellen, dass das virtuelle Modell die Realität in der Anlage widerspiegelt. Da dies nicht in Echtzeit erfolgt, sind die Anforderungen an die entsprechenden Systeme niedriger.

Dazu sind an geeigneten Stellen weitere IP-Kameras Ki, Kii, Kiii usw. angeordnet, deren Bilddaten ebenfalls in den Abgleich mit dem virtuellen Modell einfließen.

Die Kameras K sind allesamt über Power-over-Ethernet-Verbindungen N mit dem Rechner I über bekannte Netzwerktechnik verbunden.

Die reale fördertechnische Anlage 1 wird mit Hilfe des virtualisierten Modells zentral gesteuert, wozu auch Informationen mit der übergeordneten Lagerverwaltungssteuerung II über geeignete Schnittstellen zur Berücksichtigung des Routings und Zielvorgaben der Auftragsabarbeitung einfließen.

Daraus erzeugt der Rechner I Materialflusssteuerungsbefehle für die realen Aktoren A, Ai, Aii, Aiii etc. zur Steuerung der Förderbewegung der jeweiligen Fördergüter bzw. Pakete 2 auf der Verteilstrecke 5 und auch zu deren Einlagerung, Lagerung, Auslagerung, ggf. Sortierung und Förderung zur Auftragsabarbeitung.

Im vorliegenden Fall wird daher der Aktor A des Ausschleusers 6 für das im Bereich 100 angeordnete Paket 2 entsprechend dessen Geschwindigkeit so angesteuert, dass das Paket 2 auf die Ausschleusung 61 und somit auf die Strecke 71 gelangt. Dazu wird dessen Lage und Geschwindigkeit aus dem virtuellen Modell verwendet und in einer im Rechner I angeordneten Vergleichseinheit daraufhin überprüft, ob ein Abgleich aufgrund der realen Lage des Fördergüter nötig ist.

Der als Schieber ausgebildete Aktor A der Ausschleusung 61 wird also über vom Rechner I anhand des virtualisierten Modells so gesteuert, dass das Paket 2 ausgeschleust wird.

Es versteht sich, dass der Rechner I bzw. die darin laufende Steuerung anhand des virtualisierten Modells auch die als Rollenförderer ausgebildete Verteilstrecke 5 steuert.

Ein Paket 2 wird also auf der Verteilstrecke 5 zur Einlagerung gefördert und nach Passieren einer Ausschleusung 61 gelangt es über die Einlagerstrecke 71 zu dem Warenlift 8. Von dem Warenlift 8 wird das Paket 2 von einem Regalbediengerät 9 übernommen und so in eine Zielregalgasse 31 bzw. entsprechendes Lagerregal der Gasse eingelagert.

Auf dem Regalbediengerät 9 ist ebenfalls eine Kamera Kvi vorgesehen, die Bilder von dem Regal 4 während der Fahrt aufnimmt und so eine Aufnahme der Belegung und Ausrichtung der Pakete im Regal ermöglicht.

Hierbei werden keine Lichtschranken oder sonstige Sensoren benötigt. Die Steuerung des Materialflusses des Pakets 2 erfolgt allein mittels des aus den Kameras K gewonnenen Bilddaten und den daraus Identifizierten Paketen und deren Position bzw. Geschwindigkeit.

Es können jedoch auch klassische Sensoren wie Lichtschranken oder Lichttaster zusätzlich oder streckenweise eingesetzt werden, um z. B. herkömmliche Module zu kombinieren.

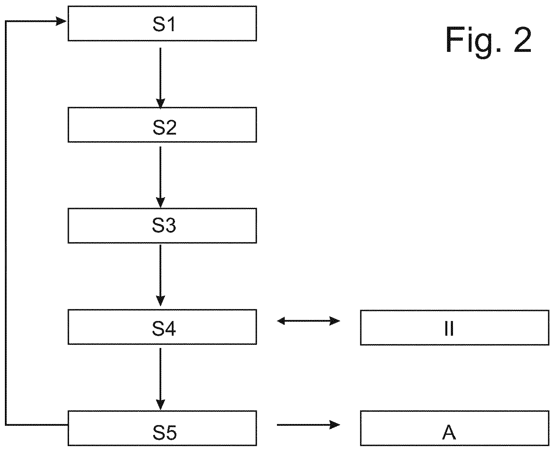

Nachfolgend wird der Ablauf der Steuerung nochmals anhand von Figur 2 erläutert.

Wie erwähnt werden von den IP-Kameras K, Ki, Kii... laufend Bilddaten aufgenommen (Schritt S1) und die Daten von den IP-Kameras K, Ki, Kii ... über das Netzwerk N an den Rechner I übermittelt (Schritt S2).

Im Rechner I werden in den Modulen 300 und 400 aus den Bilddaten eine Identifikation und Positionsbestimmung der Fördergüter durchgeführt (Schritt S3).

Die Identifikation erfolgt durch eine Bilderkennung im Modul 300 anhand der Fördergüterabmessungen und äußeren Merkmale. Durch Kommunikation mit der Lagerverwaltungssteuerung II stehen Informationen über die erwarteten Pakete und deren Eigenschaften zur Verfügung, um die Identifikation zu erleichtern bzw. zu bestätigen. So kann auch die jeweilige Ausrichtung erkannt und ggf. eine Änderung von der Steuerung veranlasst werden.

Die nachgelagerte Positionsbestimmung im Modul 400 erfolgt anhand des bekannten Standorts der Kamera K, die die jeweiligen Bilddaten liefert und der aus Differenzbildern errechneten Geschwindigkeit etc.

Mit diesen aktuellen Daten wird die im Rechner I vorgesehene Vergleichseinheit gespeist, die das virtualisierte dreidimensionale Modell zyklisch auf eine Übereinstimmung mit der Realität überprüft, was natürlich - je nach Wichtigkeit - innerhalb gewisser Abweichungen als vorliegend angenommen werden kann. So kann jederzeit sichergestellt werden, dass sich die Fördergüter im Modell auch an korrekten Positionen befinden und sich auch im Rahmen der Vorhersage (Virtualisierung) gerade bewegen. Treten zu viele Abweichungen auf, so gibt dies Anlass, dass Model und/oder die reale Anlage zu überprüfen.

Um Steuerungsbefehle für die fördertechnische Anlage aus dem Modell zu berechnen, fließen noch Daten von der Lagerverwaltungssteuerung II über geeignete Schnittstellen zur Berücksichtigung des Routings und Zielvorgaben der Auftragsabarbeitung ein.

Aus diesen Informationen werden dann die Steuerungsbefehle für die jeweiligen Aktoren berechnet und an die Aktoren übermittelt (Schritt S5).

Anschließend beginnt der Ablauf von Neuem.

## Patentansprüche

1. Verfahren zur Steuerung des Materialflusses von Fördergütern in einer fördertechnischen Anlage eines realen Lagers mittels eines virtuellen dreidimensionalen Modells,
wozu in einem zentralen Rechner die fördertechnische Anlage des realen Lagers virtualisiert wird, wofür ein virtuelles dreidimensionales Modell der realen fördertechnischen Anlage mit den Abmessungen der einzelnen fördertechnischen Komponente, deren Bewegungsparametern und Aktoreneigenschaften sowie der Identität, Form und Lage der Fördergüter hinterlegt ist, und die fördertechnische Anlage des realen Lagers aus dem virtuellen Modell heraus zentral gesteuert wird;
von den Fördergütern in der realen fördertechnischen Anlage mittels Sensoren Bilder zyklisch erfasst werden, und das virtuelle Modell zyklisch anhand der aufgenommenen Bilder mit der Realität abgeglichen wird, wobei die fördertechnische Anlage ein Fördersystem (1) umfasst, das eine Verteilstrecke (5), die Pakete (2) an- bzw. abfördert, umfasst und zwischen der Verteilstrecke (5) und Lagerregalen (4) Ein- bzw. Auslagerstrecken (7) angeordnet sind, die durch Ein- bzw. Ausschleusungen (6) mit der Verteilstrecke (5) und über Warenlifte (10) mit Lagerregalgassen (3) verbunden sind, wobei die Verteilstrecke (5) und die Ein- bzw. Auslagerstrecken (7) Rollen- oder Bandförderer sind, und wobei Pakete (2) durch die Warenlifte (8) von den Einlagerstrecken (7) in die Regalebenen der Lagerregale (4) bzw. von den Regalebenen auf die Auslagerstrecken (7) transportiert werden und ein Transport der Pakete (2) innerhalb der Regalebenen der Lagerregale 4 über Regalbediengeräte (9) erfolgt, wobei im Bereich der Zuführung (100) der Verteilstrecke (5) eine IP-Kamera (K) Bilder zyklisch von der Verteilstrecke (5) aufnimmt und ebenfalls IP-Kameras (Ki, ii, iii, iv, v...) auf dem Regalbediengerät (9) und im Bereich der Aktoren (A) und Auslagerstrecken (7) angeordnet sind, so dass im Rechner ein abgeglichenes Modell der Anlage einschließlich der Pakete (2) mit allen Informationen, die zur Auslösung von Aktoren erforderlich sind, zur Verfügung steht und der Rechner aus diesen Informationen und den Anforderungen des Leitsystems Befehle an die Aktorik erzeugt, um den Materialfluss gezielt zu steuern, wozu aus den erfassten Bildern von den IP-Kameras in dem zentralen Rechner mittels Bilderkennung (300) die Pakte (2) identifiziert, deren Form in ein dreidimensionales Modell übertragen werden und deren Position (400) zum Zeitpunkt der Bilderfassung in der realen fördertechnischen Anlage bestimmt werden und das virtuelle Modell zyklisch anhand der Identifikation und Positionsbestimmung abgeglichen wird.

2. Verfahren nach Anspruch 1, **dadurch gekennzeichnet, dass** die erfassten Bilder in dem zentralen Rechner mit aus dem virtuellen Modell errechneten Bildern mittels Bilderkennung verglichen werden, um Abweichungen festzustellen.

3. Verfahren nach einem der vorhergehenden Ansprüche, **dadurch gekennzeichnet, dass** die Position, Form und Identität der Fördergüter zur Erstellung des virtuellen Modells in dem zentralen Rechner aus einer anfänglichen Bilderfassung und/oder aus Datenbankinformationen zum Startzeitpunkt der Virtualisierung ermittelt werden.

4. Verfahren nach einem der vorhergehenden Ansprüche, **dadurch gekennzeichnet, dass** das virtuelle Modell ein virtuelles dreidimensionales Modell des gesamten Lagers einschließlich aller fördertechnischen Anlagen, Fördergüter und Regallager ist.

5. Verfahren nach einem der vorhergehenden Ansprüche, **dadurch gekennzeichnet, dass** der zentrale Rechner eines oder mehrere verschiedene Module aufweist:
- Schnittstelle zu den Bildsensoren zur Entgegennahme der Bilddaten;
- Aufbereitung und Verarbeitung der Bilddaten;
- Bilderkennung und nachgelagerte Identifikation und Positionsbestimmung der erkannten Fördergüter;
- Virtualisiertes Modell des realen Lagers mit abgeglichenen Informationen, die aus der Bilderkennung stammen, bezüglich Identifikation, Form und Positionsbestimmung der Fördergüter;
- Schnittstelle zu einem Lagerverwaltungsrechner zur Berücksichtigung des Routings und Zielvorgaben der Auftragsabarbeitung und Austausch von Informationen zu den Fördergütern;
- Erzeugung von Materialflusssteuerungsbefehlen mittels des aktualisierten virtualisierten Modells für die realen Aktoren zur Steuerung der Förderbewegung der jeweiligen Fördergüter zu deren Einlagerung, Lagerung, Auslagerung, ggf. Sortierung und Förderung zur Auftragsabarbeitung.

6. Verfahren nach einem der vorhergehenden Ansprüche, **dadurch gekennzeichnet, dass** die Sensoren zur Bildaufnahme derart im Lager angeordnet sind, dass das Sichtfeld der Bildaufnahme Einschleusstellen, Ausschleusstellen, Kreuzungen und Umlenkstellen der Fördergüter auf den fördertechnischen Komponenten sowie der Lagerregale beinhaltet.

7. System zur Steuerung des Materialflusses von Fördergütern in einem Distributionslager oder einem Zentrallager mit einem zentralen Rechner, der eingerichtet ist, um ein virtuelles dreidimensionales Modell der realen fördertechnischen Anlage vorzuhalten, in dem die reale fördertechnische Anlage mit Abmessungen der einzelnen fördertechnischen Komponenten und deren Bewegungsparametern einschließlich der Aktoreneigenschaften und der Identität, Form und Lage der Fördergüter hinterlegt ist, und die fördertechnische Anlage des realen Lagers aus dem virtuellen Modell heraus zentral gesteuert wird, wozu eine Schnittstelle zu einem Lagerverwaltungsrechner zum Austausch von Daten bezüglich des Routings und Zielvorgaben der Auftragsabarbeitung von den Fördergütern und ein Modul zur Erzeugung von Materialflusssteuerungsbefehlen über eine Schnittstelle zu Aktoren der fördertechnischen Anlage für die Steuerung der Aktoren mit Hilfe des virtualisierten Echtzeit-Modells vorgesehen ist,
mit Bildsensoren zur zyklischen Erfassung von Bildern von den Fördergütern in der fördertechnischen Anlage,
einer Schnittstelle zwischen den Bildsensoren und dem zentralen Rechner zur Bereitstellung von Bilddaten in vorgegebenen zyklischen Zeitintervallen,
wobei der zentrale Rechner mit einer Vergleichseinrichtung ausgestattet ist, um das virtuelle Modell zyklisch anhand der aufgenommenen Bilder mit der Realität abzugleichen, wobei die fördertechnische Anlage ein Fördersystem (1) umfasst, das eine Verteilstrecke (5), die Pakete (2) an- bzw. abfördert, umfasst und zwischen der Verteilstrecke (5) und Lagerregalen (4) Ein- bzw. Auslagerstrecken (7) angeordnet sind, die durch Ein- bzw. Ausschleusungen (6) mit der Verteilstrecke (5) und über Warenlifte (10) mit Lagerregalgassen (3) verbunden sind, wobei die Verteilstrecke (5) und die Ein- bzw. Auslagerstrecken (7) Rollen- oder Bandförderer sind, und wobei Pakete (2) durch die Warenlifte (8) von den Einlagerstrecken (7) in die Regalebenen der Lagerregale (4) bzw. von den Regalebenen auf die Auslagerstrecken (7) transportiert werden und ein Transport der Pakete (2) innerhalb der Regalebenen der Lagerregale 4 über Regalbediengeräte (9) erfolgt, wobei im Bereich der Zuführung (100) der Verteilstrecke (5) eine IP-Kamera (K) Bilder zyklisch von der Verteilstrecke (5) aufnimmt und ebenfalls IP-Kameras (Ki, ii, iii, iv, v...) auf dem Regalbediengerät (9) und im Bereich der Aktoren (A) und Auslagerstrecken (7) angeordnet sind, so dass im Rechner ein abgeglichenes Modell der Anlage einschließlich der Pakete (2) mit allen Informationen, die zur Auslösung von Aktoren erforderlich sind, zur Verfügung steht und der Rechner aus diesen Informationen und den Anforderungen des Leitsystems Befehle an die Aktorik erzeugt, um den Materialfluss gezielt zu steuern, wobei die Bildsensoren IP-Kameras sind, die derart angeordnet sind, dass ihr Sichtfeld die Bildaufnahme von Einschleusstellen, Ausschleusstellen, Kreuzungen und Umlenkstellen sowie Einlagerungsstellen und Auslagerungsstellen der Fördergüter auf den fördertechnischen Komponenten umfasst, wobei die Vergleichseinrichtung eine Bilderkennung umfasst, die eingerichtet ist, um aus den erfassten Bildern die Fördergüter zu identifizieren und deren Position zum Zeitpunkt der Bilderfassung in der realen fördertechnischen Anlage zu bestimmen und das virtuelle Modell zyklisch mit der Identifikation und Positionsbestimmung der Fördergüter abzugleichen.

8. System nach Anspruch 7, **dadurch gekennzeichnet, dass** die Bildsensoren an Stellen der fördertechnischen Anlage angeordnet sind, an denen eine Einlagerung, Lagerung, Auslagerung, Sortierung und Förderung zur Auftragsabarbeitung der Fördergüter sowie Lagerung der Fördergüter erfolgt.

## Claims

1. Method for controlling the material flow of goods being conveyed in a conveyance technique of a real warehouse by means of a virtual three-dimensional model,
for which purpose the conveyance technique of the real warehouse is virtualised in a central computer, for which purpose a virtual three-dimensional model of the real conveyance technique with the dimensions of the individual conveyance technique component, its movement parameters and actuator properties and the identity, form and position of the goods being conveyed is stored, and the conveyance technique of the real warehouse is controlled centrally from the virtual model;
images of the goods being conveyed in the real conveyance technique are cyclically captured by means of sensors and the virtual model is cyclically adjusted to reality on the basis of the images taken, whereby the conveyance technique comprises a conveyor system (1), which comprises a distribution path (5) which conveys packets (2) inwards and outwards and paths (7) into and out of storage are arranged between the distribution path (5) and the storage racks (4), which are connected to the distribution path (5) by inducts and discharges (6) and are connected to the storage rack aisles (3) via goods lifts (8), whereby the distribution path (5) and the inward and outward paths (7) are roller conveyors or belt conveyors, and whereby packets (2) are transported by the goods lifts (8) from the inward paths (7) into the rack levels of the storage racks (4) or from the rack levels to the outward paths (7) and a transport of the packets (2) is made within the rack levels of the storage racks (4) via rack serving apparatuses (9), whereby in the region of the feed (100) of the distribution path (5) images of the distribution path (5) are taken at cyclical intervals by an IP camera (K) and also IP cameras (Ki, ii, iv, v...) are arranged on the rack serving apparatuses (9) and in the region of the actuators (A) and outwards paths (7), so that so that a synchronized model of the technique including the packets (2) with all the information required to trigger actuators is available in the computer, and the computer generates commands to the actuators from this information and the requirements of the management system in order to control the material flow in a targeted manner, whereas the packets (2) are identified from the captured images of the IP cameras in the central computer by means of image recognition (300), their form is translated into a three-dimensional model and their position (400) at the point in time of image capture in the real conveyance technique is determined and the virtual model is adjusted cyclically on the basis of the identification and position determination.

2. Method as claimed in claim 1, **characterised in that** the captured images are compared in the central computer to images which are calculated from the virtual model, by means of image recognition in order to establish deviations.

3. Method as claimed in any one of the preceding claims, **characterised in that** the position, form and identity of the goods being conveyed are ascertained for the purpose of creating the virtual model in the central computer from an initial image capture and/or from database information at the start time of the virtualisation.

4. Method as claimed in any one of the preceding claims, **characterised in that** the virtual model is a virtual three-dimensional model of the entire warehouse including all conveyance techniques, goods being conveyed and rack stores.

5. Method as claimed in any one of the preceding claims, **characterised in that** the central computer has one or a plurality of different modules:
- interface to the image sensors for receiving the image data;
- preparation and processing of the image data;
- image recognition and downstream identification and position determination of the recognised goods being conveyed;
- virtualised model of the real warehouse with adjusted information originating from the image recognition, relating to the identification, form and position determination of the goods being conveyed;
- interface to a warehouse management computer in order to take into account the routing and objectives of the order processing and exchange of information relating to the goods being conveyed;
- generation of material flow control commands by means of the updated, virtualised model for the real actuators for controlling the conveying movement of the respective goods being conveyed for placement into storage, storage, removal from storage, optionally sorting and conveyance thereof for order processing.

6. Method as claimed in any one of the preceding claims, **characterised in that** the sensors for image taking are arranged in the warehouse such that the field of view in which the images are taken includes introducing points, discharging points, crossings and diversion points of the goods being conveyed on the conveyance technique components and the storage racks.

7. System for controlling the material flow of goods being conveyed in a distribution warehouse or a central warehouse having a central computer which is configured to provision a virtual three-dimensional model of the real conveyance technique, in which the real conveyance technique with dimensions of the individual conveyance technique components and their movement parameters including the actuator properties and the identity, form and position of the goods being conveyed is stored, and the conveyance technique of the real warehouse is controlled centrally from the virtual model, for which purpose an interface to a warehouse management computer for exchanging data relating to the routing and objectives of the order processing of the goods being conveyed and a model for generating material flow control commands via an interface to actuators of the conveyance technique for controlling the actuators with the aid of the virtualised real-time model are provided, comprising image sensors for cyclically capturing images of the goods being conveyed in the conveyance technique,
an interface between the image sensors and the central computer for providing image data in specified cyclical time intervals,
wherein the central computer is equipped with a comparison device in order to adapt the virtual model cyclically to reality on the basis of the images taken, whereby the conveyance technique comprises a conveyor system (1), which comprises a distribution path (5) which conveys packets (2) inwards and outwards and paths (7) into and out of storage are arranged between the distribution path (5) and the storage racks (4), which are connected to the distribution path (5) by inducts and discharges (6) and are connected to the storage rack aisles (3) via goods lifts (8), whereby the distribution path (5) and the inward and outward paths (7) are roller conveyors or belt conveyors, and whereby packets (2) are transported by the goods lifts (8) from the inward paths (7) into the rack levels of the storage racks (4) or from the rack levels to the outward paths (7) and a transport of the packets (2) is made within the rack levels of the storage racks (4) via rack serving apparatuses (9), whereby in the region of the feed (100) of the distribution path (5) images of the distribution path (5) are taken at cyclical intervals by an IP camera (K) and also IP cameras (Ki, ii, iv, v...) are arranged on the rack serving apparatuses (9) and in the region of the actuators (A) and outwards paths (7), so that so that a synchronized model of the technique including the packets (2) with all the information required to trigger actuators is available in the computer, and the computer generates commands to the actuators from this information and the requirements of the management system in order to control the material flow in a targeted manner, whereby the image sensors are IP cameras which are arranged such that their field of view includes the taking of images of induction points, discharging points, intersections and diversion points as well as placement into storage points and removal from storage points of the goods being conveyed on the conveyor components, whereby the comparison device includes an image recognition which is configured to identify from the captured images the goods being conveyed and to determine their position at the time of image capture in the real conveyor installation and to adapt the virtual model cyclically with the identification and position determination of the goods being conveyed.

8. System as claimed in claim 7, **characterised in that** the image sensors are arranged at points on the conveyance technique where the goods being conveyed are placed into storage, stored, removed from storage, sorted and conveyed for order processing, and the goods being conveyed are stored.

## Revendications

1. Procédé de commande du flux matériel de produits transportés dans une installation de transport d'un entrepôt réel au moyen d'un modèle tridimensionnel virtuel, ce pour quoi l'installation de transport de l'entrepôt réel est virtualisée dans un ordinateur central afin de mettre en mémoire un modèle tridimensionnel virtuel de l'installation de transport réelle qui présente les dimensions des composants de transport individuels, leur paramètres de mouvement et propriétés d'actionneurs ainsi que l'identité, la forme et la position des produits transportés et de commander l'installation de transport de l'entrepôt réel de manière centralisée à partir du modèle virtuel; des images des produits transportés qui se trouvent dans l'installation de transport réel sont acquises cycliquement à l'aide de capteurs et le modèle virtuel est adapté cycliquement à la réalité sur la base des images acquises, l'installation de transport comprenant un système de transport (1) qui comprend une voie de distribution (5) qui amène ou emporte les paquets (2) et des voies de stockage et de déstockage (7) étant disposées entre la voie de distribution (5) et les rayonnages d'entrepôt (4) et étant reliées à la voie de distribution (5) par le biais de sas d'entrée ou de sortie (6) et à des allées de rayonnages d'entrepôt (3) par le biais de monte-charges (8),
la voie de distribution (5) et les voies de stockage et de déstockage (7) étant des transporteurs à rouleaux ou à bande, et les paquets (2) étant transportés par le biais des monte-charges (8) depuis les voies de stockage (7) jusqu'aux niveaux des rayonnages d'entrepôt (4) ou depuis les niveaux de rayonnage jusque sur les voies de déstockage (7) et un transport des paquets (2) étant effectué à l'intérieur des niveaux des rayonnages d'entrepôt (4) par le biais de gerbeurs (9), une caméra IP (K) acquérant cycliquement des images de la voie de distribution (5) dans la zone d'amenée (100) de la voie de distribution (5) et de même des caméras IP (Ki, ii, iii, iv, v...) étant disposées sur le gerbeur (9) et dans la zone des actionneurs (A) et des voies de déstockage (7) de sorte qu'un modèle adapté de l'installation, incluant les paquets (2) avec toutes les informations nécessaires au déclenchement des actionneurs, soit disponible dans l'ordinateur et que l'ordinateur génère des instructions à destination des actionneurs à partir de ces informations et des exigences du système directeur afin de commander spécifiquement le flux matériel, ce pour quoi les paquets (2) sont identifiés à partir des images acquises par les caméras IP dans l'ordinateur central à l'aide d'une reconnaissance d'image (300), leur forme est transmise dans un modèle tridimensionnel et leur position (400) est déterminée au moment de l'acquisition d'image dans l'installation de transport réelle et le modèle virtuel est adapté cycliquement sur la base de l'identification et de la détermination de la position.

2. Procédé selon la revendication 1, **caractérisé en ce que** les images acquises sont comparées dans l'ordinateur central à des images calculées à partir du modèle virtuel par une reconnaissance d'images afin de déterminer des écarts.

3. Procédé selon l'une des revendications précédentes, **caractérisé en ce que**, afin de créer le modèle virtuel dans l'ordinateur central, la position, la forme et l'identité des produits transportés sont déterminées à partir d'une acquisition d'image initiale et/ou à partir d'informations de base de données au début de la virtualisation.

4. Procédé selon l'une des revendications précédentes, **caractérisé en ce que** le modèle virtuel est un modèle tridimensionnel virtuel de tout l'entrepôt, incluant toutes les installations de transport, les produits transportées et l'entrepôt à rayonnage.

5. Procédé selon l'une des revendications précédentes, **caractérisé en ce que** l'ordinateur central comporte un ou plusieurs modules différents:
- une interface avec les capteurs d'images pour recevoir les données d'images;
- la préparation et le traitement des données d'images;
- la reconnaissance d'images suivie de l'identification et de la détermination de la position des produits transportés reconnus;
- un modèle virtualisé de l'entrepôt réel avec des informations adaptées qui proviennent de la reconnaissance d'images, en ce concerne l'identification, la forme et la détermination de position des produits transportés;
- une interface avec un ordinateur de gestion d'entrepôt pour prendre en compte le routage et les spécifications de destination du traitement des commandes et l'échange d'informations sur les produits transportés;
- la génération d'instructions de commande de flux matériel à l'aide du modèle virtualisé actualisé pour les actionneurs réels afin de commander le mouvement de transport des produits transportés respectifs en vue de leur stockage, magasinage, déstockage, éventuellement tri et transport pour le traitement des commandes.

6. Procédé selon l'une des revendications précédentes, **caractérisé en ce que** les capteurs d'acquisition d'images sont disposés dans l'entrepôt de manière à ce que le champ de vision de l'acquisition d'images contiennent des points d'entrée, des points de sortie, des intersections et des points de déviation des produits transportés sur les composants de transport et les rayonnages d'entrepôt.

7. Système de commande du flux matériel de produits transportés dans un entrepôt de distribution ou un entrepôt central à l'aide d'un ordinateur central conçu pour conserver un modèle tridimensionnel virtuel de l'installation de transport réelle dans lequel l'installation de transport réelle est mise en mémoire avec les dimensions des composants de transport individuels et leurs paramètres de mouvement, incluant les propriétés des actionneurs et l'identité, la forme et la position des produits transportés, et dans lequel l'installation de transport de l'entrepôt réel est commandée de manière centralisée à partir du modèle virtuel, ce pour quoi une interface avec un ordinateur de gestion d'entrepôt est prévue pour échanger des données concernant le routage et les spécifications de destination du traitement des commandes des produits transportés et un module est pour générer des instructions de commande de flux matériel par le biais d'une interface avec des actionneurs de l'installation de transport afin de commander les actionneurs à l'aide du modèle en temps réel virtualisé,
ledit système comprenant des capteurs d'images destinés à acquérir cycliquement des images des produits transportés dans l'installation de transport,
une interface entre les capteurs d'images et l'ordinateur central pour fournir des données d'images à intervalles de temps cycliques spécifiés,
l'ordinateur central étant équipé d'un dispositif de comparaison qui permet d'adapter cycliquement le modèle virtuel à la réalité sur la base des images acquises,
l'installation de transport comprenant un système de transport (1) qui comprend une voie de distribution (5) qui amène ou emporte des paquets (2) et des voies de stockage et de déstockage (7) étant disposées entre la voie de distribution (5) et les rayonnages d'entrepôt (4) et étant reliées à la voie de distribution (5) par le biais de sas d'entrée ou de sortie (6) et à des allées de rayonnages d'entrepôt (3) par le biais de monte-charges (8), la voie de distribution (5) et les voies de stockage et de déstockage (7) étant des transporteurs à rouleaux ou à bande, et les paquets (2) étant transportés par le biais des monte-charges (8) depuis les voies de stockage (7) jusqu'aux niveaux des rayonnages d'entrepôt (4) ou depuis les niveaux de rayonnage jusque sur les voies de déstockage (7) et un transport des paquets (2) étant effectué à l'intérieur des niveaux des rayonnages d'entrepôt (4) par le biais de gerbeurs (9), une caméra IP (K) acquérant cycliquement des images de la voie de distribution (5) dans la zone d'amenée (100) de la voie de distribution (5) et de même des caméras IP (Ki, ii, iii, iv, v...) étant disposées sur le gerbeur (9) et dans la zone des actionneurs (A) et des voies de déstockage (7) de sorte qu'un modèle adapté de l'installation, incluant les paquets (2) avec tous les informations nécessaires au déclenchement des actionneurs, soit disponible dans l'ordinateur et que l'ordinateur génère des instructions à destination des actionneurs à partir de ces informations et des exigences du système directeur afin de commander spécifiquement le flux matériel, les capteurs d'images étant des caméras IP qui sont disposées de manière à ce que leur champ de vision comprenne l'acquisition d'images de points d'entrée, de points de sortie, d'intersections et de points de déviation ainsi que de points de stockage et points de déstockage des produits transportés sur les composants de transport, le dispositif de comparaison comprenant une reconnaissance d'images qui est conçue pour identifier les produits transportés à partir des images acquises et pour déterminer leur position au moment de l'acquisition d'images dans l'installation de transport réelle et pour adapter cycliquement le modèle virtuel à l'identification et la détermination de position des produits transportés.

8. Système selon la revendication 7, **caractérisé en ce que** les capteurs d'images sont disposés en des points de l'installation de transport où sont effectués le stockage, le magasinage, le déstockage, le tri et le transport en vue du traitement des commandes des produits transportés et le magasinage des produits transportés.
